# EUROPÄISCHE PATENTSCHRIFT

(11) **EP 2 817 130 B1**
(45) Veröffentlichungstag und Bekanntmachung des Hinweises auf die Patenterteilung: **24.08.2016**
(21) Anmeldenummer: 13718082.4
(22) Anmeldetag: 22.02.2013
(51) Int. Cl.: B29B 11/08, B29C 49/06, B29C 49/64, B29C 45/72

(54) **VERFAHREN UND VORRICHTUNG ZUR HERSTELLUNG VON PREFORMEN**
METHOD AND DEVICE FOR PRODUCING AN OPTIMIZED BASE CONTOUR ON PREFORMS
PROCÉDÉ ET DISPOSITIF DE FABRICATION DE PRÉFORMES À FOND PRÉSENTANT UN PROFIL OPTIMISÉ

(30) Priorität: 24.02.2012 DE 102012004613
(43) Veröffentlichungstag der Anmeldung: 31.12.2014
(73) Patentinhaber: Aktas, Mahir, 35330 Balcova Izmir (TR)
(72) Erfinder: Aktas, Mahir, 35330 Balcova Izmir (TR)
(74) Vertreter: Patentanwälte Klickow & Partner Partnerschaftsgesellschaft mbB
(86) Internationale Anmeldenummer: PCT/DE2013/000111
(87) Internationale Veröffentlichungsnummer: WO 2013/123931

(56) Entgegenhaltungen:
- WO-A1-2004/041510
- DE-A1- 2 450 696
- DE-A1-102009 030 762
- US-A- 4 005 969
- DATABASE WPI Week 199223 Thomson Scientific, London, GB; AN 1992-189710 XP002707818, -& JP H04 126206 A (DAINIPPON PRINTING CO LTD) 27. April 1992 (1992-04-27)

## Beschreibung

Die vorliegende Erfindung betrifft ein Verfahren und eine Vorrichtung zur Herstellung von Preformen zur Ausformung einer vorteilhaften Bodengeometrie für einen späteren Blasprozess.

Preformen sind spritzgegossene Rohlinge aus mindestens einem thermoplastischen Material, die in Blasmaschinen für die Herstellung von streckgeblasenen Kunststoffbehältern zum Einsatz kommen.

Für die gemäß dieser Erfindung beschriebene übliche Herstellung von Preformen wird Kunststoffrohmaterial plastifiziert und anschliessend mit hohem Druck in ein Ein- oder Mehrkavitäten-Formwerkzeug gepresst.

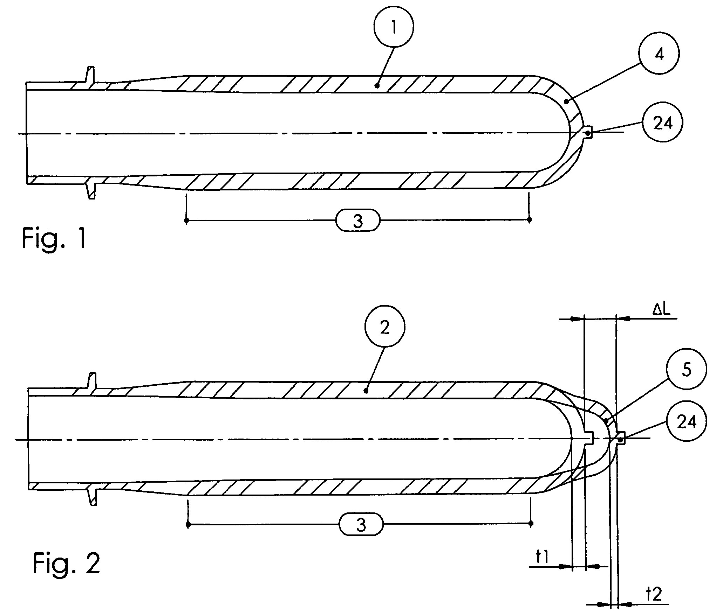

Es entstehen Preformen gemäss Fig.1, welche geometrisch im Wesentlichen aus einem Hals- und Schaftbereich und einer Bodenkuppe bestehen, sowie innen durch den Einsatz eines Kernes im Formwerkzeug hohl sind. Der Halsbereich ist derart geformt, dass er beispielsweise mit einer Schraubkappe wiederverschliessbar ausgestaltet sein kann. Der Halsbereich erfährt während des Blasprozesses jedoch keine weitere Veränderung. Der Schaftbereich und die Bodenkuppe werden dagegen bei erhöhten Temperaturen zu Hohlkörpern aufgeblasen, wodurch der Kunststoff verstreckt wird und sich dabei erheblich verfestigt. Daher sind die zu verformenden Preformbereiche geometrisch im Zusammenspiel mit der Kerngeometrie für die sich später einstellende Flaschenqualität verantwortlich.

Aus der DE 10 2009 030 762 A1 ist bereits ein Verfahren zur Herstellung eines Preforms mit einer definierten Bodengeometrie bekannt. Der fertig hergestellte Preform wird hierbei aus einem spritzgegossenen thermoplastischen Material hergestellt und besitzt im Bereich einer Bodenkuppe eine dünnere Wandstärke als im Bereich eines Preformschaftes. Eine Kühlung der Prefoms nach einer Entformung erfolgt unter Verwendung einer Kühlhülse.

Aus der US 4005969 A ist ebenfalls ein Verfahren zur Herstellung eines Preforms mit einer definierten Bodengeometrie bekannt. Auch dieser Preform besitzt im Bereich einer Bodenkuppe eine dünnere Wandstärke als im Bereich eines Preformschaftes. Der Preform besteht aus einem thermoplastischen Material und ist zur Herstellung eines blasgeformten Behälters vorgesehen.

Da das Formwerkzeug üblicherweise die höchste Investition in einem Produktionssystem darstellt, wird hoher Wert darauf gelegt, dass es effizient betrieben wird. So wird der Preform, dessen Aussenhaut im direkten Kontakt mit dem intensiv gekühlten Formstahl steht, und folglich dort schnell erstarrt, schadensfrei und ohne mechanische Deformation entformt, damit das Formwerkzeug ohne Zeitverluste für den nächsten Produktionszyklus bereit ist.

Bei den üblichen schnellen Produktionszyklen verbleibt eine erhebliche Restwärme im Inneren der Preformwandung, die zu einer Rückerwärmung führt, wodurch der Preform wiedererweichen und auskristallisieren kann, was ihn unbrauchbar werden lässt.

Es ist daher unerlässlich, den Preform nach der Entformung weiterhin intensiv in einfacheren Formenteilen, in sogenannten Kühlhülsen, während mehrerer Produktionszyklen zu kühlen.

Der Preform, wie er in Fig.. 1 dargestellt ist, entspricht dem heutigen Stand der Technik, bei dem es unausweichlich ist, dass die Wanddicken des Preforms besonders im Bereich der Bodenkuppe und des Schaftes ähnliche Wandstärken aufweisen. Friert das Material durch dünnere Wandstärken im Angussbereich frühzeitig ein, kann das Schrumpfen in der Abkühlphase durch ein Nachdrücken der Schmelze, mit Wirkung auf den gesamten Preform einschliesslich dem Halsbereich, nicht vermieden werden, was in der Konsequenz zu ungewünschten Einfallstellen in kritischen Bereichen des Preforms führt.

Die Preform-Geometrie, wie sie in Fig. 2 gezeigt ist und deren Vorteile nachfolgend noch erläutert werden, kann daher nicht im bekannten Spritzgiessverfahren hergestellt werden, da die Wandstärke im Bereich der Preformkuppe und damit in Angussnähe wesentlich dünner als im weiteren Verlauf des Preformschaftes ist und somit durch ein verfrühtes Einfrieren dieses dünnen Bereiches, besonders im Halsbereich Einfallstellen nicht mehr vermieden werden können.

Die zentrale Aufgabe der hier vorliegenden Erfindung ist, ein Verfahren und eine Vorrichtung zu beschreiben, mit denen sich Preformen mit wesentlich günstigeren Bodenkonturen, welche für das spätere Streckblasen vorteilhaft sind, erzeugen lassen.

Die Lösung mit ihren Merkmalen ist in den Ansprüchen 1 und 10 beschrieben.

Mit einer Umformung der Preform-Bodenkontur kann deren Oberfläche in diesem Bereich vergrössert werden. Dies hat bereits Vorteile, da die Infrarotheizungen der nachfolgenden Blasmaschinen über diese vergrösserte Oberfläche effizienter Wärmeenergie einbringen können und die Reckstange der Blasmaschine während des Blasprozesses die Wandstärke der fertigen Flasche besser beeinflussen kann.

Die Vorteile dieser optimierten Bodenform werden beispielsweise in der WO 2008/041186 A2 beschrieben und sind in der Fachwelt als "Capello-Design" bekannt. Da die dort beschriebene Bodenkontur bereits während des Spritzgießprozesses hergestellt wird, kann diese zwar beliebig gestaltet werden, auf die Wandstärke kann wegen der vorgängig beschriebenen physikalischen Eigenschaften jedoch kaum Einfluss genommen werden.

In einer wesentlich dünneren Wandstärke der Preformkuppe liegt aber der eigentliche Vorteil für das spätere Ausblasen des Flaschenbodens. Diese Ausführung wird auch in der Anmeldung WO 2010/149522 A1 beschrieben. Es ist erkannt worden, dass deutlich dünnere Wandstärken, als sie durch Spritzgiessen erreicht werden können, im Kuppenbereich des Preforms vorteilhaft sind. Hier wird der im Standardprozess hergestellte Preform in der nachfolgenden Kühlhülse mit Pressluft unter Druck gesetzt. Die Kühlhülse ist dabei derart ausgebildet, dass der Bodenbereich sich noch aufblähen kann, bis die vergrösserte Bodenkontur dieser Deformation ein Ende setzt. Dies führt zur gewünschten Oberflächenvergrösserung bei gleichzeitiger Verringerung der Wandstärke. Dieses Verfahren ist in seinem Ergebnis deutlich besser als das Capello-Design, jedoch ist der Aufblasvorgang kaum zu kontrollieren. So kann es durch inhomogene Temperaturen dazu kommen, dass der Anguss aus dem Zentrum weicht. Zudem ist der präzise Wandstärkenverlauf im Kuppenbereich nicht vorhersagbar, sondern unterliegt dem zufälligen, thermischen Umfeld der Preformkuppe.

Eine physikalische Grundlage der Erfindung ist darin zu sehen, dass die aus dem Werkzeug entnommenen Preformen ohne weiteres Fortsetzen der Kühlung grundsätzlich rückerweichen, d.h. sich auf ein bestimmtes Temperaturniveau egalisieren und dadurch wieder leicht verformbar werden. Während, wie beim Stand der Technik beschrieben, der Preformschaft und die Preformkuppe durch Kontaktkühlung in der Kühlhülse abgekühlt werden, bleibt nun für die Preformkuppe durch eine Modifikation der Kühlhülsenkontur im Kuppenbereich der Kühlkontakt aus, wodurch sie sich auf ca. 90 - 130°C rückerwärmt und damit wieder verformbar wird. Dabei liegt es in der Natur, dass der Angusspunkt am heissesten ist, da hier während des Nachdruckprozesses die letzte heisse Schmelze zugeführt wurde. Im weiteren Kuppenverlauf nimmt die Temperatur dann graduell ab, wodurch das Material entsprechend höherviskoser wird.

Im Gegensatz zum Stand der Technik, bei dem der Preform in der Nachkühlung grundsätzlich intensiv abgekühlt wird, um einen allgemein möglichst verfestigten Preform zu erhalten, liegt der Basisgedanke der Erfindung darin, dass durch die veränderte Bodengeometrie der Kühlhülse, die damit den direkten Kontakt zum Preformboden ausschliesst, eine intensive Kühlung des Preformbodens entfällt und damit eine Rückerwärmung dieses Bereiches zulässt. Der Preformboden hat nach einer Konditionierzeit von wenigen Sekunden normalerweise einen vom Anspritzpunkt zum Preformschaft graduell abnehmenden Temperaturverlauf, der für eine nachfolgende, gezielte, mechanische Verformung optimal ist. Dieser Temperaturverlauf in der Bodenkuppe ist dafür verantwortlich, dass der heisseste Punkt am leichtesten verformbar ist, während dies im weiteren Verlauf der Kuppe graduell abnimmt. Dies führt dazu, dass bei der nachfolgenden mechanischen Verformung mittels eines speziell ausgeformten Prägekörpers der Angussbereich am dünnsten wird, während die Wandstärke der Kuppe im weiteren Verlauf zum Schaft immer dicker wird, bis sie schliesslich übergangslos im Schaft weitergeführt wird. Dabei wird eine sprunghafte Wanddickenänderung vermieden, die beim Blasprozess der Flasche nachhaltig stören würde.

Der aus solidem Material hergestellte Prägekörper, beispielsweise aus Teflon, ist dahingehend gestaltet, dass er vorzugsweise beim Deformationsvorgang zuerst den Angusspunkt berührt und erst im weiteren axialen Bewegungsverlauf nach und nach den gesamten Kuppenbereich, immer vom Anguss ausgehend, ebenfalls prägend verformt. Unter Prägen wird verstanden, dass das plastische Material der Preformkuppe durch Ziehen, Drücken und Schieben derart geformt wird, wie es die Kühlhülsen und der Prägekörper präzise vorgeben. In Abhängigkeit des Preforminnendurchmessers und der Temperatur der Preformkuppe sind axiale Prägekräfte von 5 bis 100N sinnvoll, sie können aber auch deutlich höher sein. Hier könnte beispielsweise für eine kugelige Preformkuppenkontur ein elliptischer Prägekörper ideal sein. Es ist aber auch denkbar, plastisch verformbare Prägekörper einzusetzen, die beispielsweise aus Silikon hergestellt sein können. Solche Prägekörper ermöglichen es, den Prägevorgang nicht direkt am Anguss zu starten, sondern an einer beliebigen Stelle innerhalb der Kuppe. Durch die elastische Verformbarkeit des Prägedorns würde der Angussbereich erst später verformt werden.

Diese Vorrichtung könnte beispielsweise dann Sinn machen, wenn sich der graduelle Temperaturverlauf in der Preformkuppe als nachteilig herausstellt, weil der Angussbereich nach dem Prägen zu dünne Wandstärken aufweist, welche sich später bei Flaschen für Druckanwendungen wie beispielsweise für kohlensäurehaltigen Getränke, negativ auswirken könnten, und diesem Temperaturverlauf entgegengewirkt werden soll. Dabei ist es von Vorteil, wenn nach dem Verformungsvorgang die Bodenkontur des Preforms innen präzise den Prägekörper und aussen die Bodengeometrie der Kühlhülse abbildet. Die nach dem Prägeprozess umgeformte Preformkuppe, welche dann ebenfalls in intensivem Kühlkontakt mit dem Kühlhülsenboden steht, kann nun durch die vergrößerte Oberfläche und die dünnere Wandstärke sehr schnell auskühlen, so dass das gefürchtete Einsetzen der Kristallisation ausbleibt.

Eine weitere Möglichkeit, den Prägevorgang in der Preformkuppe in Bezug auf den Wandstärkenverlauf zu beeinflussen ist die Möglichkeit, den Prägekörper aktiv zu temperieren oder zu kühlen. Bei einem temperierten Prägekörper könnte die Kontaktfläche zum Preformboden dünner ausgeprägt werden, während diese bei gekühlten Prägedornen dann umgekehrt dicker werden könnte.

Bedingt durch eine von Anbeginn intensive Kühlung im Bereich des Preformschaftes ist dieser vom mechanischen Prägevorgang der Preformkuppe weitestgehend ausgeschlossen, da die abgekühlte Aussenhaut des Kunststoffmaterials fest genug ist, um diesen Deformationskräften zu widerstehen. Diese Eigenschaft macht den gesamten Deformationsvorgang des Preforms reproduzierbar. Im anderen Fall würde der Preformschaft sich axial dehnen und die Deformationsarbeit in der Preformkuppe nachhaltig stören.

Ein weiteres mögliches Problem am Schaft während des Prägens ist, dass dieser für die problemlose Entformung aus dem Formwerkzeug häufig. einen sehr kleinen Winkel von wenigen Minuten aufweist, welcher zur zuverlässigen Kühlung auch in der Kühlhülse zu finden ist. Durch die axialen Kräfte des Prägevorganges und den bereits erhärteten Preformschaft kann dieser sich wegen des kleinen Winkels verkeilen und würde nur schwer wieder entformt werden können. Zudem wäre die axiale Position des Preforms in der Kühlhülse kaum reproduzierbar. Daher wird der originale Kuppenverlauf des Preforms vor dem Prägen in der Kühlhülse für einen kleinen Bereich abgebildet, so dass für den Preform eine kleine Stützfläche mit einem Hinterschnitt von wenigen zehntel Millimetern entsteht. Auf diese Weise wird der Preform zuverlässig positioniert und kann sich unter den Axialkräften nicht verkeilen.

Ein Preform mit den beschriebenen, umgeformtem Boden bietet für den nachfolgenden Streckblasprozess grosse Vorteile. Der Angusspunkt, welcher später die grösste Distanz zur Aufheizvorrichtung der Blasmaschine hat, lässt sich herkömmlich schwer aufheizen - oder nur mit dem Nachteil, dass näher gelegene Bereiche zu heiss werden. Dies liegt daran, dass die Leistung der Heiz-Strahlung in quadratischer Funktion mit der Entfernung abnimmt. In Folge kann das Material im Bodenbereich, ganz besonders am Anguss, nicht zufriedenstellend verstreckt werden, wodurch die meisten streckgeblasenen Kunststoff-Flaschen im Bodenbereich eine unnötige Materialanhäufung aufweisen, die sogar zur Schwächung des Bodens führen kann.

Mit der nun wesentlich dünneren Preformwandstärke am Angusspunkt, welche sich im weiteren Kuppenverlauf zum Preformschaft bewusst im Verlauf verdickt, und dort übergangslos anschliesst, stehen die Wandstärke und die Distanz zur Aufheizvorrichtung im perfekten Verhältnis. Das Aufheizverhalten der Preformkuppe ist optimal. Bei derart wiedererwärmten Preformen kann das gesamte überflüssige Kunststoffmaterial während des Aufblasprozesses aus dem Bodenbereich gezogen werden und damit in letzter Konsequenz eingespart werden. Darüber hinaus wird der Bodenbereich durch die nun möglichen höheren Verstreckungsgrade zusätzlich verfestigt, wodurch die Qualität des Flaschenbodens deutlich erhöht wird.

Eine weitere Möglichkeit besteht darin, die Preformböden in Formen auszuprägen, die der fertigen Bodenform der Flasche entgegenkommen. Flaschen können beispielsweise Oval sein, oder die Böden besitzen Füsschen, wodurch die gleichmässige Materialverteilung beim Streckblasen im Bodenbereich erschwert wird. Durch die formgebende Vorbereitung der Preformböden kann später eine bessere Materialverteilung erzielt werden. Diese Formgebung kann am Prägedorn oder in der Kühlhülse eingebracht werden. Selbstverständlich kann dies auch an beiden Orten gleichzeitig oder sequentiell geschehen. Andere Formgebungen stellen die Möglichkeit bereit, die Oberfläche der Preformkuppe durch Wellen, Linien oder Rauhigkeit zu vergrössern. Dies würde die Energieübertragung von der IR-Heizung der Blasmaschine ebenfalls unterstützen.

Grundsätzlich hat das Prägeverfahren auf die Produktionszykluszeit keinen Einfluss, da die Zeit des Spritzgiessens im Formwerkzeug länger dauert als der Prägevorgang.

Die Erfindung wird nachfolgend und mit Bezug auf die beigefügten Zeichnungen näher erläutert. Die Zeichnungen zeigen in
- Fig. 1: Preform im Querschnitt mit Rundkuppe wie er üblicherweise nach dem Stand der Technik hergestellt wird
- Fig. 2: Preform im Querschnitt mit einer Bodengeometrie, die durch einen Prägevorgang nach dem Spritzgiessprozess in der Nachkühlstation ausgeformt wurde und deren Wandstärkenverlauf zum Angusspunkt beliebig verändert werden kann
- Fig. 3a: Schematische Ansicht während des Abschlusses eines Spritzgiessprozesses bei geöffnetem Formwerkzeug mit eingefahrenem Entnahmearm zur Entnahme von Preforms. Hier ist die Prägeeinheit als mögliche Option mit der beweglichen Schliessplatte verbunden.
- Fig. 3b: Schematische Ansicht bei herausgefahrenem Entnahmearm aus dem geöffneten Formwerkzeug bei gleichzeitiger Positionierung der Preformmündungen zur Prägeeinheit
- Fig. 3c: Schematische Ansicht nach einem Schließvorgang des Formwerkzeuges wobei, die hier an der beweglichen Schliessplatte angebundene Prägeeinheit mit bewegt wird und dadurch der Prägevorgang eingeleitet wird und von individuell beweglichen Druckeinheiten beliebig vollzogen werden kann.
- Fig. 4a: Schnittansicht einer einzelnen Prägevorrichtung bestehend aus Kühlhülse mit individueller Bodenkontur, einem Preform vor dem Prägevorgang und einem Prägekörper mit schwimmender Lagerung, der geometrisch mit einer Bodenkontur der Kühlhülse festgelegt wurde. Der Prägedorn ist individuell für den Prägevorgang optional axial angetrieben.
- Fig. 4b: Schnittansicht wie 4a mit eingeleitetem Prägevorgang.
- Fig. 4c: Schnittansicht wie 4a mit vollzogenem Prägevorgang.
- Fig. 5: Schematische Schnittansicht einer Prägevorrichtung bestehend aus einer Kühlhülse mit einem vergrösserten Hohlraum und einem Prägedorn, welche gemeinsam die optimierte Geometrie im Bodenbereich aufweisen.
- Fig. 6a-c: Prägeablauf der Preformkuppe durch geometrisch vorbestimmten Prägekörper und Kühlhülse
- Fig. 6d: Geometrisch vorbestimmter Prägekörper im Zusammenspiel mit einer Kühlhülse, der im Angussbereich eine Materialansammlung erlaubt
- Fig. 6e: Geometrisch vorbestimmter Prägekörper im Zusammenspiel mit einer Kühlhülse aus formflexiblem Material, der während des Prägens die gewünschte Kontur annimmt

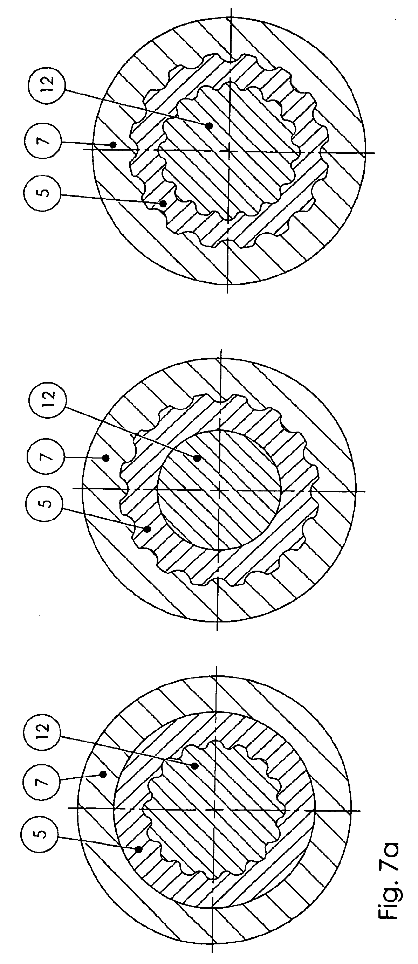

- Fig. 7a: Geometrisch vorbestimmter Prägekörper im Zusammenspiel mit einer Kühlhülse, die zur Oberflächenvergrösserung Rippen aufweisen und/oder aufgeraut sind

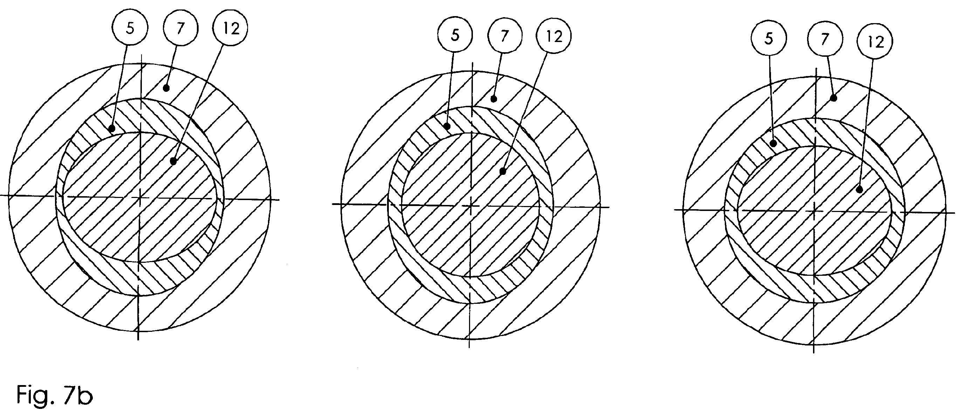

- Fig. 7b: Geometrisch vorbestimmter Prägekörper im Zusammenspiel mit einer Kühlhülse, die geometrisch auf den Formflaschenboden, wie in diesem Beispiel oval abgestimmt ist

Die Zeichnungen sollen im Folgenden die Erklärung des Prägevorganges der Preformkuppe unterstützen.

Fig. 1 zeigt einen nach Stand der Technik hergestellten Preform, i.d.R. mit einer kugelförmigen Kuppe, die aber auch andere Geometrien aufweisen kann. Dabei weist die Wandstärke der Preformkuppe 1 i.d.R. ca. 80% der Wandstärke des Preformschaftes 3 auf. Für den Blasprozess optimierte Preformen gemäß FIG. 2 mit dünneren Wandstärken am Anguss 4 können auf Grund der Gefahr des Einfrierens der Schmelze nicht spritztechnisch realisiert werden, da dann der Nachdruck, welcher dem Schrumpfen des Preforms während des Abkühlprozesses entgegenwirkt, nicht mehr in den entscheidenden dickwandigeren Bereichen wirken kann.

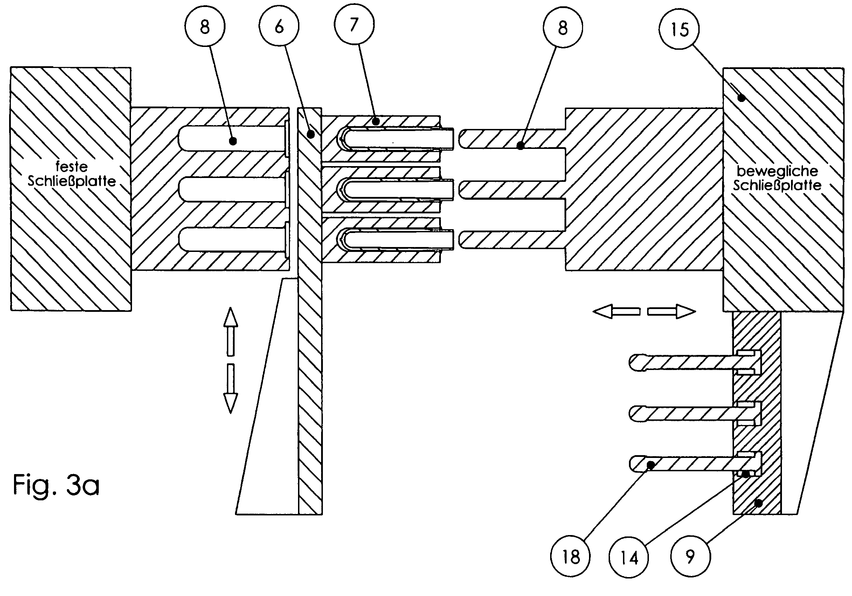

Um mit der herkömmlichen Spritzgießtechnik dennoch einen wie in den Fig. 2 gezeigten Preform produzieren zu können, wird der Preform zunächst in üblicher Weise in einem Formwerkzeug 8 hergestellt und nach dem ersten Abkühlen und dem Öffnen gemäß FIG. 3a des Formwerkzeugs in üblicher Weise mit einem Entnahmearm 6 entnommen. Der Entnahmearm 6 weist dabei eine Vielzahl von Kühlhülsen 7 auf, in denen der Preform gemäß FIG. 1 meist bis zum Hals- oder Neckbereich eingeführt wird.

Sowohl die Spritzgießmaschinen mit Formwerkzeug 8 wie auch der Entnahmearm 6 sind aus dem Stand der Technik hinlänglich bekannt.

In Fig.. 3a sind von einem solchen Entnahmearm 6 beispielhaft drei Kühlhülsen 7 dargestellt. Der zunächst hergestellte Preform gemäß Fig. 1 weist eine herkömmliche Form mit einer relativ dicken Wandstärke 4 im Bodenbereich auf und ist in seinem äusseren Körperbereich bei fast vollständigem, direkten Kontakt in einer wassergekühlten Kühlhülse 7 aufgenommen. Auf diese vorliegende Kühlung, betrieben mit Flüssigkeiten oder Gasen, muss ebenfalls nicht näher eingegangen werden, da sie aus dem Stand der Technik in vielfältigen Ausführungsvarianten bekannt ist.

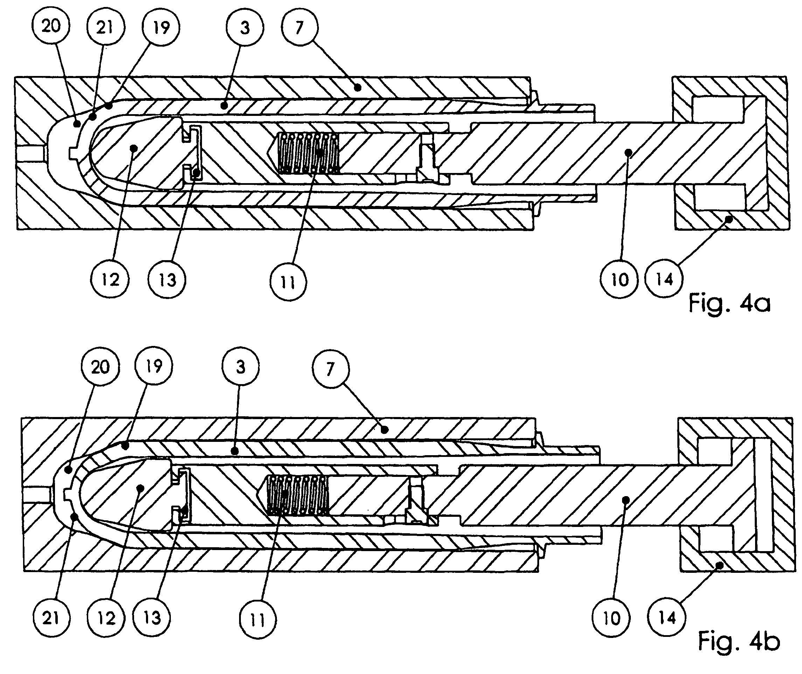

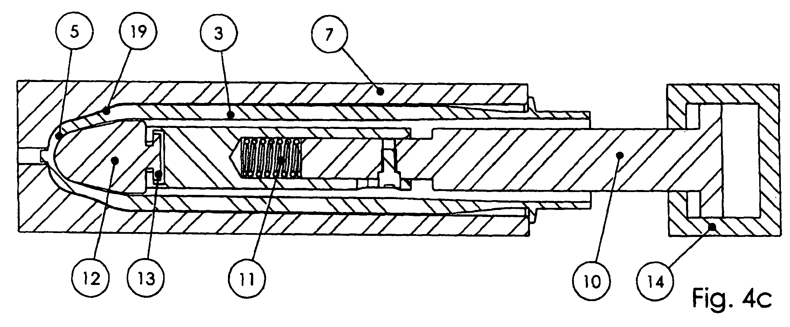

Die in Fig. 4a dargestellte Preformpositionierung zeigt, dass die Kühlhülse 7 im Bodenbereich eine vergrösserte Geometrie 20 aufweist, wodurch der direkte Kühlkontakt am Preformboden 21 verhindert wird. Dadurch wird direkt nach der Preformübernahme durch den Entnahmearm 6 der Preformschaft 3 intensiv gekühlt, während die Preformkuppe 4 sich wegen der fehlenden Kühlung homogen rückerwärmen kann und dadurch wieder erweicht. Die Anzahl der Kühlhülsen 7 kann zur Intensivierung der Preformkühlung ein Vielfaches der Anzahl der Kavitäten im Formwerkzeug sein. Dadurch kann die Verweilzeit des Preforms in der Kühlphase über mehrere Spritzgiesszyklen andauern.

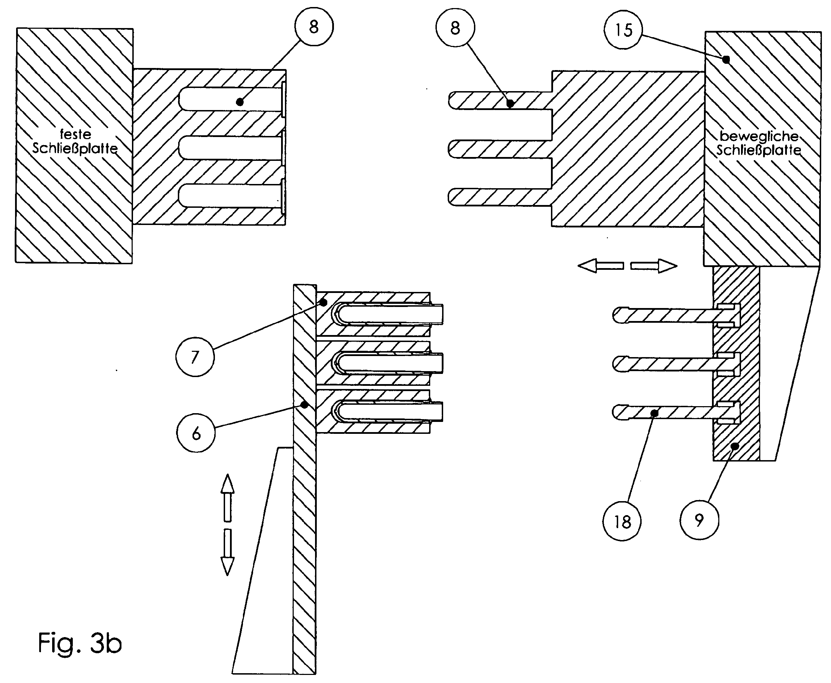

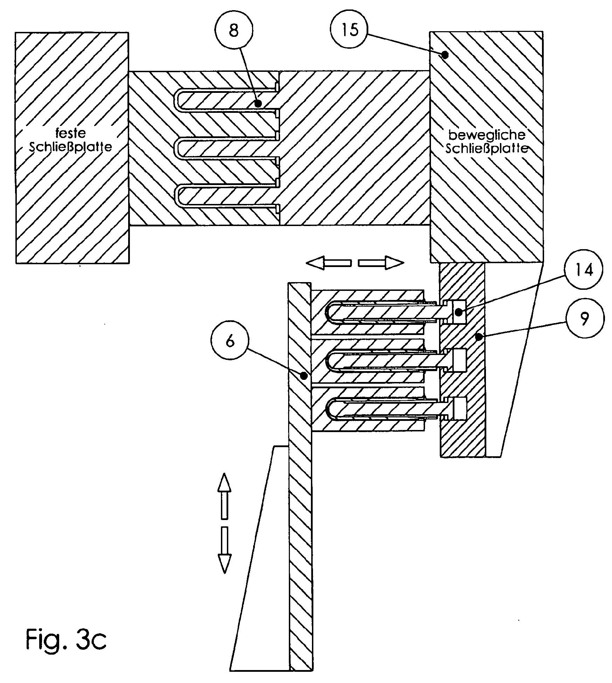

Um das Formwerkzeug 8 schnellstmöglich für den nächsten Spritzzyklus bereitzustellen, fährt gemäss Fig. 3b der Entnahmearm 6 aus dem Formenbereich. Dabei nimmt er eine Position ein, die die Preformmündungen der zuletzt hergestellten Anzahl von Preformen 1 mit den gleichzahligen Prägedornen 18, welche auf der Prägeplatte 9 montiert sind, axial fluchten lässt. Die Prägeplatte 9 ist der Einfachheit halber direkt an der beweglichen Schliessplatte 15 montiert. Sie könnte aber auch eine eigenständig bewegliche Einheit sein. Durch den direkten Verbund der Prägeplatte 9 mit der beweglichen Schliessplatte 15 werden nun gemäss Fig. 3c während des Schliessvorganges des Formwerkzeuges 8 die Prägedorne 18 in die Preformmündungen eingeführt. Der Aufbau der Prägedorne ist in Fig. 4a-c dargestellt.

Die Prägedorne 18 bestehen im Wesentlichen aus einem optionalen individuellen axialen Antrieb 14, einer Kolbenstange 10, einer Kolbenstangenverlängerung 22, die mit einer Druckfeder 11 axial zur Kolbenstange gefedert ist und einem Prägekörper 12 der radial schwimmend 13 gelagert ist. Der Prägekörper 12, am vorderen Ende des Prägedorns 18 kann wahlweise mit elastischem oder starrem Material ausgeführt werden und optional temperiert oder wassergekühlt sein.

Die Kraft und der Zeitpunkt für den eigentlichen Prägehub kann durch einen eigenen gesamthaften Antrieb der Prägeplatte 9 und die Auslegung der Druckfeder 11 bestimmt werden. Ist die Prägeplatte 9 jedoch direkt mit der beweglichen Schliessplatte verbunden, ist die Verwendung von individuellen axialen Antrieben 14 nur dann notwendig, wenn der Prägezeitpunkt zeitlich verzögert werden soll. Bringen alle individuellen axialen Antriebe 14 die gleiche Kraft in den Prägevorgang, kann auf die Druckfeder 11 verzichtet werden.

Die Preformen Fig. 1 sind durch die Innenkontur der Kühlhülsen 7 so gelagert, dass sie trotz der vergrösserten Bodengeometrie 20 reproduzierbar positioniert und axial fixiert sind. Dies wird dadurch erreicht, dass die Bodengeometrie 20 der Kühlhülse 7 so ausgelegt ist, dass die Preformkuppe 4 auf einer kleinen Kreisringfläche in Kugelform 19, welche eine Hinterschneidung bildet, sicher aufsteht. Diese Fläche ist so ausgelegt, dass sich der Preformschaft 3 während des Prägens nicht durch die axialen Kräfte in der Kühlhülse 7 verkeilt.

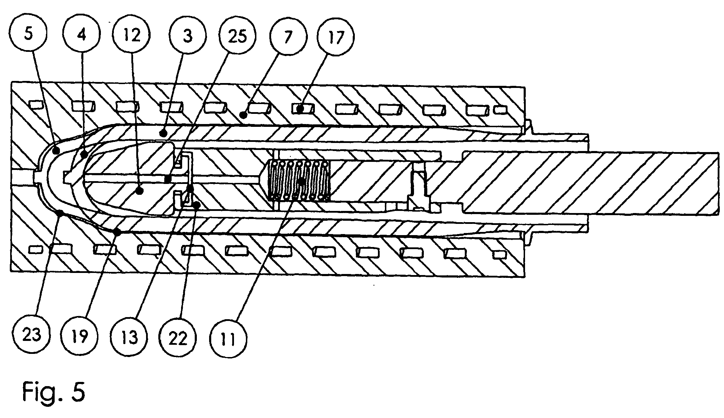

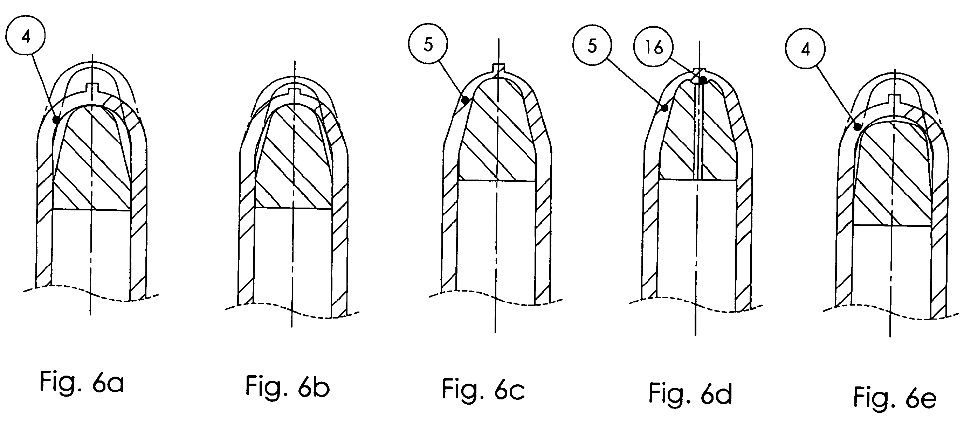

Der Prägevorgang selbst wird in Fig. 5 und FIG 6a-c dargestellt. Bedingt durch das reproduzierbare Wärmeprofil in der Preformkuppe 4, mit der höchsten Temperatur am Angusspunkt 24 die aber zum Preformschaft graduell abnimmt, kann es sinnvoll sein den Prägekörper 12 als erstes dort 24 anzusetzen. Es gibt aber auch Anwendungen, bei denen es wichtig ist, dass direkt am Angusspunkt 24 eine Materialansammlung aus amorphem PET verbleibt. Dies kann beispielsweise durch einen Prägekörpers 16 gewährleistet werden, der statt über eine Kuppe an seiner Spitze über eine kreisringförmige Angriffsstelle FIG 6d verfügt. Dieser würde mit dem Prägevorgang nicht direkt am Angusspunkt 24 beginnen, sondern kreisringförmig um den Angusspunkt herum. Damit ist gewährleistet, dass sich innerhalb des Kreisringes das amorphe Material sammeln kann und nicht beim Prägen vom Anguss weggedrückt wird. Zur Sicherstellung der vollständigen und reproduzierbaren Ausformung kann die eingeschlossene Luft über eine dafür vorgesehene Entlüftungsbohrung 25 entweichen. Darüber hinaus ist es auch möglich formflexible Prägekörper FIG 6e einzusetzen, die dann nicht direkt am Angusspunkt 24 ansetzen müssen. Durch ihre Verformbarkeit nehmen sie erst mit dem Abschluss des Prägevorganges ihre optimale Form im Angussbereich 24 an, wodurch dort gezielt mehr Material verbleiben kann.

Eine weitere Ausführungsform der Prägeeinheit gemäss Fig. 6f kann im Prägekörper 12, oder ganz besonders im Boden der Kühlhülse 7, verschiedene Arten von Nuten oder Rippen enthalten, die zur zusätzlichen Oberflächenvergrösserung dienen. Ein Aufrauen der Oberfläche unterstützt diese Massnahme zusätzlich. Eine besondere Ausführungsform könnten spezielle Geometrien sein, die die Herstellung von beispielsweise ovalen Flaschenböden oder Flaschenböden mit Füßchen unterstützt.

Durch den beschriebenen graduellen weiteren Temperaturverlauf der Preformkuppe 4 im Preformschaft 3 gibt das Material während Prägevorganges in Richtung des Preformschaftes 3 zunehmend schwerer nach, wodurch die Wandstärke dort ebenfalls graduell immer weniger reduziert wird. Dieser Effekt kann durch eine ballige Bodenkontur 23 weiter unterstützt werden, da dort das plastische Material während des Prägens vom Preformschaft 3 zum Angusspunkt 24 über die intensiv gekühlte Oberfläche abrollt und damit der Effekt des graduell abnehmenden Wandstärkenverlaufes zusätzlich unterstützt wird. Dieser Effekt ist für den späteren Blasprozess gewünscht, da der Bereich des Preformschaftes in der Blasmaschine dichter an der Aufheizvorrichtung ist als der Angusspunkt, welcher bei rotierendem Preform immer die maximale Distanz zur Heizung hat.

Der Preformschaft 3 selbst kann während des Prägeprozesses nicht nachgeben, da seine Aussenhaut abgekühlt und damit eine Umformung unter den eingesetzten Prägekräften nicht möglich ist. Die nun durch mechanisches Prägen optimierte Preformkuppe 5 wird durch die nun geringere Wandstärke und die vergrösserte Oberfläche besonders im vorher heissesten Bereich, dem Angusspunkt 24, intensiv abgekühlt, wodurch ein Auskristallisieren des Kunststoffes vermieden wird.

Ist der Prägevorgang abgeschlossen, können die Prägedorne 18 zu einem prozessabhängig sinnvollen Zeitpunkt jederzeit wieder zurückgefahren werden. Die nun mit dünnwandigem Boden optimierten Preformen 2 können je nach Anzahl der mehrfach verfügbaren Kühlhülsen entsprechend für weitere Produktionszyklen in den Kühlhülsen 7 verbleiben, bis sie auf eine akzeptable Temperatur abgekühlt sind und dann ausgeworfen werden können.

Bevorzugt wird der Prägedorn 18 mit einer Entlüfungsbohrung 25 ausgestattet, um ein Entweichen von eingeschlossener Luft bei der plastischen Verformung des Preformmaterials im Bereich der Kuppe zu unterstützen.

Durch die plastische Verformung des Materials im Bereich der Preformkuppe durch einen mechanischen Formungsvorgang können nahezu beliebige Materialverteilungen realisiert werden. Bei der Vorgabe der Materialverteilung brauchen weder aus einem Spritzvorgang noch aus einem Blasvorgang resultierende Beschränkungen berücksichtigt zu werden. Die Materialverteilung kann mit somit völlig frei entsprechend den Randbedingungen des nachfolgenden Blasvorganges zur Durchführung einer biaxialen Materialorientierung erfolgen. Es können insbesondere Randbedingungen hinsichtlich einer optimalen Beheizung des Vorformlings im Bereich der Prefomkuppe als auch aus der Durchführung des Blasvorganges bei der Umformung des Preforms in den geblasenen Behälter resultierende Randbedingungen berücksichtigt werden.

Die erfindungsgemäße mechanische Formgebung im Bereich der Preformkuppe ermöglicht es, den Formungsvorgang ohne Druckluftzufuhr und bevorzugt bei einem normalen Umgebungsdruck durchzuführen. Es werden bevorzugt auch keine Hilfsmittel des nachfolgenden Blasvorganges zur biaxialen Orientierung des Materials verwendet. Es gibt somit keine erhöhten Anforderungen beispielsweise an die Gestaltung und Steuerung der für den Blasvorgang verwendeten Reckstange oder der für den Blasvorgang verwendeten Druckluftzufuhr.

Erfindungsgemäß ist es somit möglich, sowohl die Formgebung im Bereich des Preforms als auch sämtliche Parameter für den nachfolgenden Blasvorgang völlig unabhängig voneinander und auf den jeweiligen Anwendungszweck hin optimiert zu wählen.

Gemäß einem Ausführungsbeispiel ist daran gedacht, vor der Durchführung des Prägevorgangs einen Zeitraum von 1 bis 20 Sekunden zu warten. Die Vorformlinge können in diesem Zeitraum beispielsweise in den Kühlhülsen belassen werden. Innerhalb der Wartezeit erfolgt ein Temperaturausgleich im Bodenbereich des Vorformlings. Der Ausgleich erfolgt sowohl von innen nach außen als auch in Richtung auf den Anguss.

### Bezugszeichenliste

- 1: Preform nach Stand der Technik
- 2: Preform mit optimiertem, dünnwandigem Boden
- 3: Preformschaft
- 4: Preformkuppe nach Stand der Technik
- 5: Durch Prägen optimierte Preformkuppe
- 6: Entnahmearm
- 7: Kühlhülse
- 8: Formwerkzeug
- 9: Prägeplatte
- 10: Kolbenstange
- 11: Druckfeder
- 12: Prägekörper
- 13: Radial schwimmende Lagerung des Prägekörpers
- 14: Individueller axialer Antrieb der Prägeeinheit
- 15: Bewegliche Schliessplatte
- 16: Aushöhlung am Prägekörper
- 17: Wasserkühlung
- 18: Prägedorn
- 19: Bodenkontur mit abstützendem Kreisring in Kugelform
- 20: Vergrösserte Kühlhülsengeometrie
- 21: Bodenfläche ohne Kühlkontakt
- 22: Kolbenstangenverlängerung
- 23: Ballige Bodenkontur
- 24: Angusspunkt
- 25: Entlüfungsbohrung

## Patentansprüche

1. Verfahren zur Herstellung eines Preforms mit optimierter Bodengeometrie, wobei der fertig hergestellte Preform aus mindestens einem spritzgegossenen thermoplastischen Material eine wesentlich dünnere Wandstärke im Bodenkuppenbereich als im Preformschaft aufweist und wobei sich die Wandstärke des Preforms im Verlauf vom Anguss zum Preformschaft graduell angleicht, und der Preform zur Umformung in blasgeformte Behälter vorgesehen ist, wobei ein Formwerkzeug nach Erstarren einer Aussenhaut des Preforms nach erster intensiver Kühlung geöffnet wird, die Preforms mittels eines Entnahmearms und Kühlhülsen des Entnahmearms aus dem geöffneten Formwerkzeug aufgenommen werden, die Kühlhülsen durch Kontaktkühlung den Preformschaft, nicht aber die Preformkuppe, vor einem Prägevorgang kühlen die somit die noch plastisch verformbare Preformkuppe mechanisch mit einem Prägekörper in Abhängigkeit von der Kühlhülsengeometrie entsprechend reproduzierbar verformt wird, und dass die Kontur der Kühlhülse und des Prägekörpers derart ausgestaltet ist, dass diese Konturen weitestgehend nach dem Verformungsvorgang am entformten Preform reproduzierbar abgebildet werden, und dass die Preformkuppen nach dem Prägevorgang durch die Wandberührung der Kühlhülsen ausgekühlt werden, **dadurch gekennzeichnet, dass** ein geometrisch bestimmter Prägedorn mit einer Entlüftungsbohrung in Kombination mit einer geometrisch bestimmten Bodenkontur den plastischen Kunststoff der Bodenkuppe durch Ziehen, Drücken und Schieben der plastischen Masse so lange verformt, bis das Volumen zwischen beiden Konturen fast oder völlig mit Kunstststoff ausgefüllt ist und damit den Prägehub begrenzt.

2. Verfahren nach Anspruch 1, **dadurch gekennzeichnet, dass** die Kontaktkühlung der Kühlhülse den Preformschaft verfestigt, während die Preformkuppe wegen fehlender Kontaktkühlung eine Rückerweichung erfährt.

3. Verfahren nach Anspruch 2, **dadurch gekennzeichnet**,sich in der Preformkuppe ein Temperaturbereich zwischen 90° und 150° einstellt.

4. Verfahren nach einem der Ansprüche 1 bis 3, **dadurch gekennzeichnet, dass** während des Prägevorganges der Preform axial am Stützring und/oder im Kuppenbereich innerhalb der neuen Bodenkontur durch einen Kreisring in Kugelform abgestützt wird.

5. Verfahren nach einem der vorhergehenden Ansprüche, **dadurch gekennzeichnet, dass** der Prägevorgang in jedem Prozessteil zeitlich frei bestimmbar ist.

6. Verfahren nach einem der vorhergehenden Ansprüche, **dadurch gekennzeichnet, dass** die Prägekraft durch mechanische oder pneumatische Federn für jeden Preform individuell einstellbar ist.

7. Verfahren nach einem der vorhergehenden Ansprüche, **dadurch gekennzeichnet, dass** die Prägekörper temperiert oder gekühlt werden.

8. Verfahren nach einem der vorhergehenden Ansprüche, **dadurch gekennzeichnet, dass** die Kühlhülse und/ oder der Prägekörper den Preformboden für spezielle Anforderungen an Flaschenformen vorformen.

9. Verfahren nach einem der vorhergehenden Ansprüche, **dadurch gekennzeichnet, dass** vor der Durchführung des Prägevorganges eine Wartezeit von 1 bis 20 Sekunden vorgesehen ist.

10. Vorrichtung zur Herstellung eines Preforms mit einer für einen Blasprozess zur Behälterherstellung optimierten Kuppengeometrie, wobei der fertig hergestellte Preform am Angusspunkt eine deutlich dünnere Wandstärke als im Schaftbereich aufweist und dass der weitere Wanddickenverlauf in der Kuppe vom Angusspunkt ausgehend sich graduell der Wandstärke des Preformschaftes anpasst, mit einem Formwerkzeug mit einem oder mehreren Formkavitäten für die erste Formgebung der Preform-Geometrien, mit einer Spritzgiessvorrichtung, die Kunststoffrohware plastitiziert, um diese plastische Masse in die Kavitäten eines geschlossenen Formwerkzeuges unter Druck einzudringen, mit einem Entnahmearm, der mit der einfachen oder mehrfachen Kavitätenanzahl von gekühlten Kühlhülsen zur Entnahme der Preforms ausgestattet ist, und die innere Kühlhülsengeometrie dem Preformschaft eine Kontaktkühlung bietet, nicht aber, oder nur teilweise, in dem Bereich des Preformbodens, mit Dornen mit gefederten und radial schwimmend gelagerten Prägekörpern, die axial in die offenen Preformen eintauchen können, sodass durch eine speziell ausgelegte Geometrie der Kühlhülse und des Prägekörpers sowie durch die axiale Bewegung des Prägekörpers, im Bereich der Preformkuppe ein Hohlraum entstehen kann, der bevorzugt die Form des fertigen Preforms beschreibt **dadurch gekennzeichnet, dass** ein geometrisch bestimmter Prägedorn mit einer Entlüftungsbohrung in Kombination mit einer geometrisch bestimmten Bodenkontur den plastischen Kunststoff der Bodenkuppe durch Ziehen, Drücken und Schieben der plastischen Masse so lange, verformen kann, bis das Volumen zwischen beiden Konturen fast oder völlig mit Kunstststoff ausgefüllt ist und damit den Prägehub begrenzt vorgesehen ist.

11. Vorrichtung nach einem der vorhergehenden Ansprüche, **dadurch gekennzeichnet, dass** der Prägekörper aus elastischem (z.B. Silikon) oder starrem (z.B. Teflon) und wärmeleitendem Material hergestellt ist.

12. Vorrichtung nach einem der vorhergehenden Ansprüche, **dadurch gekennzeichnet, dass** der Prägekörper gekühlt oder temperiert ist.

13. Vorrichtung nach einem der vorhergehenden Ansprüche, **dadurch gekennzeichnet, dass** die Kühlhülsen flüssigkeitsgekühlt sind.

14. Vorrichtung nach einem der vorhergehenden Ansprüche, **dadurch gekennzeichnet, dass** der Prägekörper axial federnd gelagert ist und die Federkräfte individuell bestimmt werden.

15. Vorrichtung nach einem der vorhergehenden Ansprüche, **dadurch gekennzeichnet, dass** der Prägekörper radial schwimmend gelagert ist.

16. Vorrichtung nach einem der vorhergehenden Ansprüche, **dadurch gekennzeichnet, dass** jeder Prägedorn einen individuellen axialen Antrieb mit vorwählbaren Hublängen und Kräften besetzt.

17. Vorrichtung nach einem der vorhergehenden Ansprüche, **dadurch gekennzeichnet, dass** die Kühlhülse im Bodenbereich und / oder der Prägekörper durch Aufrauen oder durch Rippen die Oberfläche der Preformkuppe weiter vergrößern.

18. Vorrichtung nach einem der vorhergehenden Ansprüche, **dadurch gekennzeichnet, dass** die Kühlhülse im Bodenbereich und / oder der Prägekörper Geometrien aufweisen, die das Blasen von speziellen Formböden unterstützen.

19. Vorrichtung nach einem der vorhergehenden Ansprüche, **dadurch gekennzeichnet, dass** der Prägedorn (18) mindestens eine Entlüftungsbohrung (25) aufweist.

## Claims

1. Method for producing a preform with an optimised base geometry, whereby the finished preform made from at least one injection-moulded thermoplastic material has a substantially thinner wall thickness in the domed base region than in the preform shaft, and the wall thickness of the preform gradually evens out along the path from the gate to the preform shaft, the preform being provided with a view to re-shaping to obtain blow-moulded containers, and when an outer skin of the preform has solidified following a first intensive cooling process a mould is opened, the preforms are taken out of the open mould by means of a removal arm and cooling sleeves of the removal arm, the cooling sleeves cool the preform shaft, but not the preform dome, by contact cooling prior to an embossing operation, the thus still plastically deformable preform dome is correspondingly mechanically deformed by means of an embossing body in a reproducible manner depending on the cooling sleeve geometry, and the contours of the cooling sleeve and embossing body are designed so that these contours are as far as possible reproducibly replicated on the demoulded preform after the demoulding operation, and the preform domes are cooled after the embossing operation due to the wall contact with the cooling sleeves, **characterised in that** a geometrically defined embossing mandrel with a venting bore in combination with a geometrically defined base contour deforms the plastic material of the base dome in the plastic state by pulling, pressing and pushing the plastic compound until the volume between the two contours is almost or completely filled with plastic material, thereby limiting the embossing stroke.

2. Method as claimed in claim 1, **characterised in that** contact cooling by the cooling sleeve solidifies the preform shaft, whereas the preform dome undergoes re-softening due to an absence of contact cooling.

3. Method as claimed in claim 2, **characterised in that** a temperature range in the preform dome is set between 90° and 150°.

4. Method as claimed in one of claims 1 to 3, **characterised in that** during the embossing operation, the preform is supported axially on a supporting ring and/or by means of a circular ring of spherical shape in the dome region within the new base contour.

5. Method as claimed in one of the preceding claims, **characterised in that** timing of the embossing operation is freely definable in every part of the process.

6. Method as claimed in one of the preceding claims, **characterised in that** the embossing force can be individually adjusted by means of mechanical or pneumatic springs for every preform.

7. Method as claimed in one of the preceding claims, **characterised in that** the embossing bodies are tempered or cooled.

8. Method as claimed in one of the preceding claims, **characterised in that** the cooling sleeve and / or the embossing body pre-form(s) the preform base for special requirements in terms of bottle shapes.

9. Method as claimed in one of the preceding claims, **characterised in that** a waiting time of 1 to 20 seconds is provided prior to running the embossing operation.

10. Device for producing a preform having an optimised dome geometry for a blow-moulding process for producing containers, the finished preform having a significantly thinner wall thickness at the gating point than in the shaft region and, starting from the gating point, the rest of the wall thickness in the dome is gradually adapted to the wall thickness of the preform shaft, comprising a mould with one or more mould cavities for the first operation of shaping the preform geometries, an injection-moulding device which plasticizes the raw plastic material in order to introduce this plastic compound into the cavities of a closed mould under pressure, a removal arm for removing the preform equipped with cooled cooling sleeves corresponding in number to the single or multiple cavities, and the internal cooling sleeve geometry provides cooling by contact for the preform shaft but not, or only partially, in the region of the preform base, having mandrels with embossing bodies in a spring-mounted and radially floating arrangement which are able to move into the open preforms so that, due to a specially designed geometry of the cooling sleeve and embossing body and due to the axial movement of the embossing body, a cavity can be created in the region of the preform dome which preferably describes the shape of the finished preform, **characterised in that** a geometrically defined embossing mandrel having a venting bore in combination with a geometrically defined base contour is provided, which is able to deform the plastic material of the base dome in the plastic state by pulling, pressing and pushing the plastic compound until the volume between the two contours is almost or completely filled, thereby limiting the embossing stroke.

11. Device as claimed in one of the preceding claims, **characterised in that** the embossing body is made from elastic (e.g. silicone) or rigid (e.g. Teflon) and heat-conducting material.

12. Device as claimed in one of the preceding claims, **characterised in that** the embossing body is cooled or tempered.

13. Device as claimed in one of the preceding claims, **characterised in that** the cooling sleeves are liquid-cooled.

14. Device as claimed in one of the preceding claims, **characterised in that** the embossing body is mounted so as to be axially resilient and the spring forces are individually defined.

15. Device as claimed in one of the preceding claims, **characterised in that** the embossing body is mounted in a radially floating arrangement.

16. Device as claimed in one of the preceding claims, **characterised in that** every embossing mandrel has an individual axial drive with pre-selectable stroke lengths and forces.

17. Device as claimed in one of the preceding claims, **characterised in that** the surface area of the preform dome can be made larger by means of roughening or ribs provided on the cooling sleeve in the base region and / or the embossing body.

18. Device as claimed in one of the preceding claims, **characterised in that** the cooling sleeve in the base region and / or the embossing body have geometries which assist blow-moulding of specially shaped bases.

19. Device as claimed in one of the preceding claims, **characterised in that** the embossing mandrel (18) has at least one venting bore (25).

## Revendications

1. Procédé de fabrication d'une préforme à fond présentant une géométrie optimisée, sachant que la préforme, fabriquée en au moins un matériau thermoplastique, extrudé, est dotée d'une épaisseur de paroi nettement plus mince dans le secteur de la coupole du fond que dans le secteur du tronc de la préforme, l'épaisseur de paroi de la préforme s'égalisant graduellement, à partir du point d'injection, en direction du tronc de la préforme et la préforme étant destinée à être transformée en un récipient moulé par soufflage, sachant qu'un outil de formage est ouvert après la solidification d'une peau extérieure de la préforme, résultant d'un premier refroidissement intensif, et que les préformes sont retirées de l'outil de formage ouvert, au moyen d'un bras de prélèvement et de douilles de refroidissement dudit bras de prélèvement, les douilles de refroidissement refroidissant par contact, avant un processus d'estampage, le tronc de la préforme, mais pas la coupole de la préforme, qui, demeurant ainsi plastiquement déformable, est adéquatement façonnée mécaniquement, de manière reproductible, avec un corps d'estampage, en fonction du contour géométrique des douilles de refroidissement, et sachant que le contour de la douille de refroidissement et celui du corps d'estampage sont configurés de sorte que lesdits contours soient formés au maximum sur la préforme, de manière reproductible, après le processus de formage, et que les coupoles des préformes, après le processus d'estampage, soient refroidies par le contact des douilles de refroidissement,
**caractérisé en ce que** la matière plastique de la coupole du fond est façonnée au moyen d'un mandrin d'estampage présentant une géométrie déterminée et un trou de sortie d'air, combiné avec un contour de fond présentant une géométrie déterminée, la masse plastique étant tirée, pressée et poussée jusqu'à ce que l'espace volumétrique entre les deux contours soit presque ou complètement rempli de matière plastique et limite ainsi la course d'estampage.

2. Procédé selon la revendication 1,
**caractérisé en ce que** le refroidissement par contact de la douille de refroidissement solidifie le tronc de la préforme, tandis que la coupole de la préforme subit un ramollissement en raison de l'absence d'un refroidissement par contact.

3. Procédé selon la revendication 2,
**caractérisé en ce que**, dans la coupole de la préforme, la température est située dans une plage de 90 ° à 150 °.

4. Procédé selon l'une des revendications 1 à 3,
**caractérisé en ce que**, pendant le processus d'estampage, la préforme prend appui axialement sur la bague d'appui et / ou, dans le secteur de la coupole, à l'intérieur du nouveau contour de fond, sur une bague annulaire en forme de bille.

5. Procédé selon l'une des revendications précédentes,
**caractérisé en ce que** le moment de chaque partie du processus d'estampage peut être déterminé librement.

6. Procédé selon l'une des revendications précédentes,
**caractérisé en ce que** la force d'estampage peut être réglée individuellement pour chaque préforme par des ressorts mécaniques ou pneumatiques.

7. Procédé selon l'une des revendications précédentes,
**caractérisé en ce que** les corps d'estampage sont tempérés ou refroidis.

8. Procédé selon l'une des revendications précédentes,
**caractérisé en ce que** la douille de refroidissement et / ou le corps d'estampage assurent un préformage du fond de la préforme en fonction d'exigences spéciales, posées à des formes de bouteilles.

9. Procédé selon l'une des revendications précédentes,
**caractérisé en ce que** l'on prévoit un temps d'attente de 1 à 20 secondes avant l'exécution du processus d'estampage.

10. Dispositif pour la fabrication d'une préforme dotée d'une coupole de géométrie optimisée, destinée à la fabrication de récipients selon un processus de soufflage, sachant que la préforme finie présente, au point d'injection, une épaisseur de paroi nettement plus mince que dans le secteur du tronc et que l'épaisseur de la paroi de la coupole, partant du point d'injection, s'adapte graduellement à l'épaisseur du tronc de la préforme, ledit dispositif étant doté d'un outil de formage avec une ou plusieurs cavités pour le premier formage géométrique de la préforme, d'un dispositif de moulage par injection, qui plastifie la matière plastique brute, pour introduire sous pression cette masse plastique dans les cavités d'un outil de formage fermé, d'un bras de prélèvement doté de douilles de refroidissement qui, prévues en nombre correspondant au nombre des cavités, assurent le prélèvement des préformes et le refroidissement du tronc, mais pas ou seulement partiellement de la préforme, par l'entrée en contact avec leur contour géométrique, intérieur, de mandrins dotés de corps d'estampage élastiques et montés flottants radialement, qui plongent axialement dans les préformes ouvertes, de sorte que, dans le secteur de la coupole de la préforme, un espace creux, qui, de préférence, décrit la forme de la préforme terminée, puisse se former en raison de la géométrie spéciales des douilles de refroidissement et du corps d'estampage, ainsi que du mouvement axial du corps d'estampage,
**caractérisé en ce qu**' est prévu un mandrin d'estampage doté d'un contour de géométrique déterminée et d'un trou de sortie d'air, qui, combiné avec un contour de fond présentant une géométrie déterminée, peut déformer la matière plastique de la coupole du fond, en tirant, pressant et poussant la masse plastique jusqu'à ce que l'espace volumétrique entre les deux contours soit presque ou complètement rempli de matière plastique, et la course d'estampage étant ainsi limitée.

11. Dispositif selon l'une des revendications précédentes,
**caractérisé en ce que** le corps d'estampage est fabriqué en matière élastique (p. ex. silicone) ou rigide (p. ex. téflon) et conducteur de chaleur.

12. Dispositif selon l'une des revendications précédentes,
**caractérisé en ce que** le corps d'estampage est refroidi ou tempéré.

13. Dispositif selon l'une des revendications précédentes,
**caractérisé en ce que** les douilles de refroidissement sont refroidies par liquide.

14. Dispositif selon l'une des revendications précédentes,
**caractérisé en ce que** le corps d'estampage est monté élastique radialement et que les forces élastiques sont déterminées individuellement.

15. selon l'une des revendications précédentes,
**caractérisé en ce que** le corps d'estampage est monté flottant radialement.

16. Dispositif selon l'une des revendications précédentes,
**caractérisé en ce que** chaque corps d'estampage est doté d'un entraînement axial individuel, avec longueurs de courses et forces pouvant être présélectionnées.

17. Dispositif selon l'une des revendications précédentes,
**caractérisé en ce que** la douille de refroidissement, dans le secteur du fond, et / ou le corps d'estampage agrandissent encore la surface de la coupole de la préforme avec des rugosités ou avec des nervures.

18. selon l'une des revendications précédentes,
**caractérisé en ce que** la douille de refroidissement, dans le secteur du fond, et / ou le corps d'estampage présentent des géométries qui favorisent le soufflage de formes de fond spéciales.

19. Dispositif selon l'une des revendications précédentes,
**caractérisé en ce que** le mandrin d'estampage (18) est doté d'au moins un trou de sortie d'air (25).
